# EUROPEAN PATENT APPLICATION

(11) **EP 3 793 260 A1**
(43) Date of publication of application: **17.03.2021**
(21) Application number: 20205176.9
(22) Date of filing: 05.03.2015
(51) Int. Cl.: H04W 40/02, H04B 7/024, H04W 88/08

(54) **DISTRIBUTED RADIO SYSTEM WITH REMOTE RADIO HEADS**

(30) Priority: 05.03.2014 US 201461948484 P
(62) Divisional of application: 15758873.2
(71) Applicant: Dali Systems Co. Ltd., Grand Cayman, KY1-1104 (KY)
(72) Inventor: Stapleton, Shawn Patrick, Menio Park, CA California 94025 (US); Trajkovic, Sasa, Menlo Park, CA California 94025 (US); Weber, Wolfgang, Menlo Park, CA California 94025 (US)
(74) Representative: Witte, Weller & Partner Patentanwälte mbB

(57) **Abstract**

A distributed antenna system comprising: one or more Digital Access Units, DAUs, (902) operatively coupled to a base transceiver station (909); a Digital Interface Unit, DIU, (922) operatively coupled to the one or more DAUs (902) by a digital link (904); a plurality of Remote Radio Heads, RRHs, (15-21, 8-14) operatively coupled to the DIU (922) by a digital link; one or more Digital Multiplexer Units, DMUs, (912) operatively coupled to one or more base band units, BBUs, (901) by a digital link (910) and operatively coupled to the one or more DAUs; a second DIU (942) operatively coupled to the one or more DMUs (912) by a digital link; and a second, different, plurality of RRHs (22-28) operatively coupled to the second DIU (942) by a digital link.

## Description

### CROSS-REFERENCES TO RELATED APPLICATIONS

This application claims priority to U.S. Provisional Patent Application No. 61/948,484, filed on March 5, 2014, entitled "Distributed Radio System with Remote Radio Heads," the disclosure of which is hereby incorporated by reference in its entirety for all purposes.

### BACKGROUND OF THE INVENTION

Wireless communication systems employing Distributed Antenna Systems (DAS) are available. A DAS typically includes one or more host units, optical fiber cable or other suitable transport infrastructure, and multiple remote antenna units. A radio base station is often employed at the host unit location commonly known as a base station hotel, and the DAS provides a means for distribution of the base station's downlink and uplink signals among multiple remote antenna units. The DAS architecture with routing of signals to and from remote antenna units can be either fixed or reconfigurable.

A DAS is advantageous from a signal strength and throughput perspective because its remote antenna units are physically close to wireless subscribers. The benefits of a DAS include reducing average downlink transmit power and reducing average uplink transmit power, as well as enhancing quality of service and data throughput.

Despite the progress made in wireless communications systems, a need exists for improved methods and systems related to wireless communications.

### SUMMARY OF THE INVENTION

The present invention generally relates to wireless communication systems employing Distributed Antenna Systems (DAS) as part of a distributed wireless network. More specifically, the present invention relates to a DAS utilizing Distributed Remote Units (DRUs) and Remote Radio Heads (RRH). Wireless and mobile network operators face the continuing challenge of building networks that effectively manage high traffic densities and high data-traffic growth rates. Mobility of and an increased level of multimedia content for end users typically demands end-to-end network adaptations and extensions that support new services and the increased demand for broadband and flat-rate Internet access. Distributed Antenna Systems (DAS) provide a mechanism to route signals to various antennas that are distributed over a given geographical area. The signals typically originate from a base transceiver station (BTS) at RF frequencies or digitally from a Baseband Unit (BBU). The BBU is part of a distributed Base Station system, whereby the Remote Radio Head is physically separated from the BBU. This kind of distributed architecture can increase flexibility of networking and decrease the cost of operating and maintaining a network. Some common interface standards between the BBU and RRH are OBSAI (Open Base Station Architecture Initiative) and CPRI (Common Public Radio Interface). The cellular payload data is transported between BBUs and RRHs at a high data rate. The BBU framed data is comprised of: payload IQ data, Control and Management (C&M) information, carrier frequency, signal bandwidth, etc. A common DAS platform that interfaces between both BBUs, at baseband, and BTSs, at RF, will simplify the distributed antenna system architecture. A common data transport mechanism that accommodates both data streams for DRUs as well as RRHs provides flexibility in interfacing infrastructure to the distributed DAS architecture.

According to an embodiment of the present invention, a system for routing signals in a Distributed Antenna System is provided. The system includes a plurality of Digital Multiplexer Units (DMUs). The plurality of DMUs are coupled and operable to route signals between the plurality of DMUs. Each of the plurality of DMUs is operable to receive a digital signal from a base band unit (BBU). The system also includes a plurality of Digital Remote Units (DRUs) coupled to at least one of the plurality of DMUs and operable to transport signals between DRUs and the at least one of the plurality of DMUs.

According to another embodiment of the present invention, a method for operating a Distributed Antenna System (DAS) is provided. The method includes receiving a digital signal from a base band unit (BBU) at at least one digital multiplexer unit (DMU) and receiving an RF signal from a base transceiver station (BTS) at at least one digital access unit (DAU). The method also includes converting the received RF signal to a baseband signal and transmitting the baseband signal to a digital remote unit (DRU). The method further includes transmitting the received digital signal to a digital interface unit (DIU) and transmitting the received digital signal from the DIU to a remote radio head (RRH).

According to a specific embodiment of the present invention, a method for routing signals in a Distributed Antenna System including a plurality of Digital Multiplexer Units (DMUs), a plurality of Digital Remote Units (DRUs), at least one Digital Interface Unit (DIU), and a plurality of Remote Radio Heads (RRHs) is provided. The method includes receiving digital signals at one of the plurality of DMUs from one of a plurality of base band units (BBUs) and transporting the digital signals from the at least one of the plurality of DMUs to the at least one DIU. The method also includes transporting signals between the at least one DIU and the plurality of RRHs and receiving RF signals at a digital access unit (DAU). The method further includes converting the RF signals to second digital signals and transporting the second digital signals to the plurality of DRUs.

According to a particular embodiment of the present invention, a system for routing signals in a Distributed Antenna System is provided. The system includes a plurality of Digital Multiplexer Units (DMUs). The plurality of DMUs are coupled and operable to route signals between the plurality of DMUs. The system also includes a plurality of Digital Remote Units (DRUs) coupled to the plurality of DMUs and operable to transport signals between DRUs and DMUs, a plurality of Base Band Units (BBUs) with digital connections to the plurality of DMUs and operable to route signals between the plurality of DMUs and the plurality of BBUs sector connections. The system further includes a plurality of Digital Interface Units (DIUs). The plurality of DIUs are coupled and operable to transport signals between the DAUs and DIUs. The system additionally includes a plurality of Remote Radio Heads (RRHs) with digital connections to the plurality of DIUs and operable to transport signals between the RRHs and the DIUs.

The plurality of DMUs can be coupled via at least one of Ethernet cable, Optical Fibre, Microwave Line of Sight or Non Line of Sight Link, Wireless Link, or Satellite Link. The plurality of DMUs can be coupled to the plurality of DRUs via at least one of Ethernet cable, Optical Fibre, Microwave Line of Sight or Non Line of Sight Link, Wireless Link, or Satellite Link. The DRUs can be connected in a daisy chain configuration, or the DRUs can be connected to the DMUs in a star configuration. The DMUs can be connected to the BBUs via at least one of a Ethernet cable, Optical Fibre, Microwave Line of Sight or Non Line of Sight Link, Wireless Link, or Satellite Link. The DRUs can be connected in a loop to a plurality of DMUs. In an embodiment, the DIUs are connected to the DMUs. Also, the DIU functionality can be embedded in the DRU.

According to another specific embodiment of the present invention, a method for routing signals in a Distributed Antenna System including a plurality of Digital Multiplexer Units (DMUs), a plurality of Digital Remote Units (DRUs), a plurality of Remote Radio Heads (RRHs), a plurality of Digital Interface Units (DIUs), a plurality of Base Band Units (BBUs), and a plurality of Base Band Units sector connections is provided. The method includes transporting signals between the RRHs and the DIUs, transporting signals between the DIUs and the DMUs or DAUs, and routing the signals between DMUs. The method also includes routing the signals between DMUs and the plurality of BBU sector port connections, providing routing tables, and using Merge blocks in the routing tables. A power level of each carrier in each DRU can be independently controlled.

According to yet another specific embodiment of the present invention, a system for routing signals in a Distributed Antenna System is provided. The system includes a plurality of Digital Interface Units (DIUs), a plurality of Digital Access Units (DAUs), and a plurality of Digital Multiplexer Units (DMUs). The plurality of DIUs are coupled and operable to route signals between the plurality of RRHs, the plurality of DAUs are coupled and operable to route signals between the plurality of DIUs, and the plurality of DMUs are coupled and operable to route signals between the plurality of DMUs. The system also includes a plurality of Digital Remote Units (DRUs) coupled to the plurality of DMUs and operable to transport signals between DRUs and DMUs and a plurality of Base Band Units (BBUs) with digital connections to the plurality of DMUs and operable to route signals between the plurality of DMUs and the plurality of BBUs sector connections. In an embodiment the plurality of DAUs and coupled and operable to route signals between the plurality of DMUs. The system can also include a plurality of Base Transceiver Stations (BTSs), wherein the plurality of BTSs are coupled and operable to route signals between the plurality of DAUs and sector RF connections of the plurality of BTSs.

According to an embodiment of the present invention, a system for routing signals in a Distributed Antenna System is provided. The system includes a plurality of Digital Multiplexer Units (DMUs), wherein the plurality of DMUs are coupled and operable to route signals between the plurality of DMUs, a plurality of Digital Remote Units (DRUs) coupled to the plurality of DMUs and operable to transport signals between DRUs and DMUs, and a plurality of Base Band Units (BBUs). The system also includes a plurality of Base Band Units with digital connections to the plurality of DMUs and operable to route signals between the plurality of DMUs and the plurality of BBUs sector connections, a plurality of Digital Interface Units (DIUs), wherein the plurality of DIUs are coupled and operable to transport signals between the DAUs and DIUs, and a plurality of Remote Radio Heads (RRHs) with digital connections to the plurality of DIUs and operable to transport signals between the RRHs and the DIUs.

The plurality of DMUs can be coupled via at least one of Ethernet cable, Optical Fiber, Microwave Line of Sight or Non Line of Sight Link, Wireless Link, or Satellite Link. The plurality of DMUs can be coupled to the plurality of DRUs via at least one of Ethernet cable, Optical Fiber, Microwave Line of Sight or Non Line of Sight Link, Wireless Link, or Satellite Link. The DRUs can be connected in a daisy chain configuration and the DRUs can be connected to the DMUs in a star configuration. In an embodiment, the DMUs are connected to the BBUs via at least one of a Ethernet cable, Optical Fiber, Microwave Line of Sight or Non Line of Sight Link, Wireless Link, or Satellite Link. The DRUs can be connected in a loop to a plurality of DMUs. Moreover, the DIUs can be connected to the DMUs. In a particular embodiment, the DIU functionality is embedded in the DRU.

According to another embodiment of the present invention, a method for routing signals in a Distributed Antenna System including a plurality of Digital Multiplexer Units (DMUs), a plurality of Digital Remote Units (DRUs), a plurality of Remote Radio Heads (RRHs), a plurality of Digital Interface Units (DIUs), a plurality of Base Band Units (BBUs), and a plurality of Base Band Units sector connections is provided. The method includes transporting signals between the RRHs and the DIUs, transporting signals between the DIUs and the DMUs or DAUs, and routing the signals between DMUs. The method also includes routing the signals between DMUs and the plurality of BBU sector port connections, providing routing tables, and using Merge blocks in the routing tables. In an embodiment, a power level of each carrier in each DRU is independently controlled.

According to a specific embodiment of the present invention, a system for routing signals in a Distributed Antenna System is provided. The system includes a plurality of Digital Interface Units (DIUs), wherein the plurality of DIUs are coupled and operable to route signals between the plurality of RRHs, a plurality of Digital Access Units (DAUs), wherein the plurality of DAUs are coupled and operable to route signals between the plurality of DIUs, and a plurality of Digital Multiplexer Units (DMUs), wherein the plurality of DMUs are coupled and operable to route signals between the plurality of DMUs. The system also includes a plurality of Digital Remote Units (DRUs) coupled to the plurality of DMUs and operable to transport signals between DRUs and DMUs, a plurality of Base Band Units (BBU), and a plurality of Base Band Units with digital connections to the plurality of DMUs and operable to route signals between the plurality of DMUs and the plurality of BBUs sector connections. The system further includes a plurality of Digital Access Units (DAUs), wherein the plurality of DAUs and coupled and operable to route signals between the plurality of DMUs and a plurality of Base Transceiver Stations (BTSs), wherein the plurality of BTSs are coupled and operable to route signals between the plurality of DAUs and the plurality of BTSs sector RF connections.

According to a specific embodiment of the present invention, a system for routing signals in a Distributed Antenna System includes a plurality of Digital Multiplexer Units (DMUs). The plurality of DMUs are coupled and operable to route signals between the plurality of DMUs. The system also includes a plurality of Digital Remote Units (DRUs) coupled to the plurality of DMUs and operable to transport signals between DRUs and DMUs, a plurality of Base Band Units (BBUs), and a plurality of Base Band Units with digital connections to the plurality of DMUs and operable to route signals between the plurality of DMUs and the plurality of BBUs sector connections. The system further includes a plurality of Digital Interface Units (DIUs), wherein the plurality of DIUs are coupled and operable to transport signals between the DAUs and DIUs, and a plurality of Remote Radio Heads (RRHs) with digital connections to the plurality of DIUs and operable to transport signals between the RRHs and the DIUs

Numerous benefits are achieved by way of the present invention over conventional techniques. For example, embodiments of the present invention provide digital multiplexer units that receive digital signals from baseband units and transport digital signals to remote units for broadcast. These and other embodiments of the invention along with many of its advantages and features are described in more detail in conjunction with the text below and attached figures.

### BRIEF DESCRIPTION OF THE DRAWINGS

Further objects and advantages of the present invention can be more fully understood from the following detailed description taken in conjunction with the accompanying drawings in which:
FIG. 1 is a block diagram of a DAS showing the basic structure and an example of transport routing according to an embodiment of the present invention.
FIG. 2 is a block diagram according to one embodiment of the invention showing the basic structure for a frequency reuse pattern of N=1 and an example of the transport routing based on having a single 3 sector BBU with 3 DMUs and 7 DRUs daisy chained together for each cell.
FIG. 3 is a block diagram according to one embodiment of the invention showing the basic structure and an example of the transport routing based on having multiple 3 sector BBUs with 3 DMUs and 7 DRUs daisy chained together for each cell.
FIG. 4 is a block diagram of a Digital Access Unit (DAU), which contains Physical Nodes and a Local Router according to an embodiment of the present invention.
FIG. 5 is a block diagram of a Digital Remote Unit (DRU) according to an embodiment of the present invention.
FIG. 6 depicts a typical topology where multiple Local Routers (DMUs and DAUs) are interconnected with multiple Remote Routers according to an embodiment of the present invention.
FIG. 7 shows a block diagram of the interconnection between BTSs to DAUs and BBUs to DMUs.
FIG. 8 is a block diagram of a Digital Multiplexer Unit (DMU) according to an embodiment of the present invention.
FIG. 9 is a block diagram according to one embodiment of the invention showing the basic structure and an example of the transport routing based on having multiple BTSs and a single BBU with 1 DMU, 1 DAU, and multiple RRHs fed by a DIU.
FIG. 10 depicts a typical topology where multiple Remote Radio Heads are interconnected with a Digital Interface Unit (DIU) according to an embodiment of the present invention.
FIG. 11 is a block diagram of a Digital Interface Unit (DIU) according to an embodiment of the present invention.

### DETAILED DESCRIPTION OF SPECIFIC EMBODIMENTS

A distributed antenna system (DAS) provides an efficient means of utilization of base station resources. The base station or base stations associated with a DAS can be located in a central location and/or facility commonly known as a base station hotel. A traditional DAS network comprises one or more digital access units (DAUs) that function as the interface between the base stations and the digital remote units (DRUs). The DAUs can be collocated with the base stations. The DRUs can be daisy chained together and/or placed in a star configuration and provide coverage for a given geographical area. The DRUs are typically connected with the DAUs by employing a high-speed optical fiber link. This approach facilitates transport of the RF signals from the base stations to a remote location or area served by the DRUs. A typical base station comprises 3 independent radio resources, commonly known as sectors. These 3 sectors are typically used to cover 3 separate geographical areas without creating cochannel interference between users in the 3 distinct sectors.

A Distributed Base Station Architecture involves the use of Base Band Units (BBUs) and multiple remotely located Remote Radio Heads (RRHs). A number of standards exist for interfacing BBUs to RRHs, some examples are OBSAI (Open Base Station Architecture Initiative) and CPRI (Common Public Radio Interface). Traditionally, a Distributed Base Station Architecture and a Distributed Antenna System (DAS) do not coexist on the same system. A Distributed Base Station Architecture typically involves vendor specific infrastructure and cannot accommodate remote radio unit sharing. This poses a problem when venues have requirements that limit the number of antennas and remote units because of issues such as space constraints, aesthetics constraints, or the need to accommodate Base Stations of different vendors, etc. that can be operated by different operators. Infrastructure sharing is a means of reducing the number visible vendor specific units in a given outdoor or indoor venue. According to embodiments of the present invention, the Distributed Antenna System is vendor and modulation agnostic in order to accommodate all the different vendor specific interfaces. Capturing the signals from the various vendor BTSs at RF is a means of ensuring that the DAS system will be agnostic. However, an active DAS system will digitize the RF signals and transport them to the remote units, whereby they will be translated back to RF. A Digital Access Unit (DAU) is the host unit that accepts the RF signals from the various BTSs.

The BTS is made up of a baseband unit (BBU) and a collocated Radio Unit. The various Radio Units of multiple vendor BTSs interface to the hosts in a DAS at RF. Thus, the Radio Unit provides the input to the hosts in the DAS network. A more efficient process is to utilize a Digital Multiplexer Unit (DMU) that digitally interfaces directly to the vendor BBUs as provided by embodiments of the present invention. This can eliminate the requirement of the BTS to translate the signal to RF and then have the DAU translate the signal back to digital baseband. The net effect is to remove any impairment that occurs through the translation process in addition to reducing the power consumption of this additional step. This DMU is then able to interface to the various vendor BBUs. The DMU serves another key function; it collates the signals of various sectors onto a single data stream that is sent to the various remote units. The remote unit radio channels are shared amongst the various sectors.. Different BTSs can be operated by different operators. The reverse operation would occur in the DMU, whereby the received uplink signals from the various remote units are transported back to the DMU and then distributed to a specific BBU. An additional feature of the DMU is that it can interface to DAUs when a system has legacy BTS equipment that requires an RF interface.

Remote Radio Heads communicate via a vendor specific protocol or a vendor specific variant of a standard protocol with the BBUs. A distributed radio network can include a combination of DRUs and RRHs. The DRUs communicate directly with the DAUs, whereas the BBUs communicates directly with the RRHs. In order to facilitate the communications of a network of BBUs, DAUs, DRUs and RRHs, the vendor specific protocol can be transported distinctly from the protocol used in the DAS. One embodiment of this transport mechanism would be to time multiplex the vendor specific protocol with the vendor agnostic protocol. This capability would enable RRHs to be connected on the same DAS network. The Digital Interface Unit (DIU) described herein can be used in order to translate the RRH protocol to and from the DAU protocol.

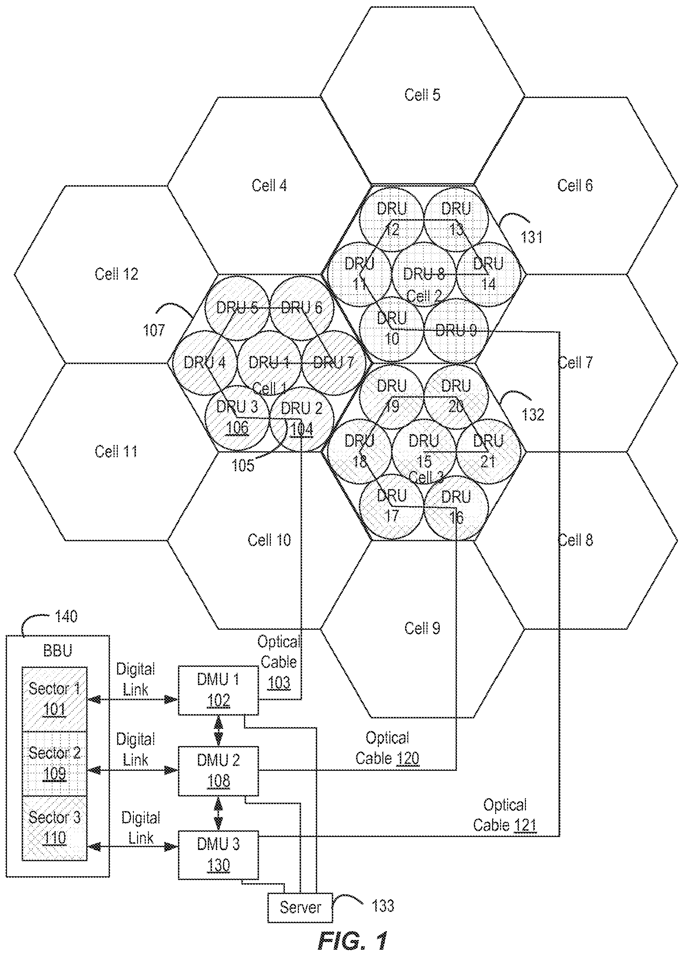

An embodiment shown in FIG. 1 illustrates a DAS network architecture according to an embodiment of the present invention and provides an example of a data transport scenario between a 3 sector Base Station and multiple DRUs. In this embodiment, the DRUs are daisy chained together to achieve coverage in a specific geographical area. Each individual sector covers an independent geographical area, which is identified as a Cell.

FIG. 1 depicts a DAS system employing multiple Digital Remote Units (DRUs) and multiple Digital Multiplexer Units (DMUs). In particular, FIG. 1 is a block diagram showing the basic structure and an example of the transport routing based on having a single 3 sector BBU with 3 DMUs and 7 DRUs daisy chained together for each cell. In accordance with the present invention, each DRU provides unique header information associated with the DRU which uniquely identifies uplink data received by that particular Digital Remote Unit.

One feature of embodiments of the present invention is the ability to route Base Station radio resources among the DRUs or group(s) of DRUs. In order to route radio resources available from one or more Base Stations, it is desirable to configure the individual router tables of the DAUs and DRUs in the DAS network.

The DMUs 102 and 108 are networked together to facilitate the routing of DRU signals among multiple DAUs. The DAUs support the transport of the RF downlink and RF uplink signals between the Base Station and the DRUs. This architecture enables the various Base Station signals to be transported simultaneously to and from multiple DRUs. PEER ports are used for interconnecting DAUs and interconnecting DRUs.

The DAUs have the capability to control the gain (in small increments over a wide range) of the downlink and uplink signals that are transported between the DAU and the base station (or base stations) connected to that DAU. This capability provides flexibility to simultaneously control the uplink and downlink connectivity of the path between a particular DRU (or a group of DRUs via the associated DAU or DAUs) and a particular base station sector.

Embodiments of the present invention use router tables to configure the networked DAUs. The local router tables establish the mapping of the inputs to the various outputs. Internal Merge blocks are utilized for the Downlink Tables when the inputs from an External Port and a PEER Port need to merge into the same data stream. Similarly, Merge blocks are used in the Uplink Tables when the inputs from the LAN Ports and PEER Ports need to merge into the same data stream.

The remote router tables establish the mapping of the inputs to the various outputs. Internal Merge blocks are utilized for the Downlink Tables when the inputs from a LAN Port and a PEER Port need to merge into the same data stream. Similarly, Merge blocks are used in the Uplink Tables when the inputs from the External Ports and PEER Ports need to merge into the same data stream.

As shown in FIG. 1, the individual base station sector's radio resources are transported to a daisy-chained network of DRUs. Each individual sector's radio resources provide coverage and capacity to an independent geographical area via the networked DRUs. In some embodiments, the term sector is utilized to characterize the base station radio resources. It should be understood that these sectors can also be referred to as Cell IDs, for example, in some markets. Moreover, although embodiments of the present invention are described in relation to DRUs covering a geographic area as cells, these cells can be referred to as sectors in some markets. Thus, depending on the nomenclature that is utilized, base station resources can be referred to as sectors or Cell IDs. Additionally, the geographical area associated with a set of DRUs can be referred to as a cell, a coverage area, or a sector depending on the nomenclature convention. Thus, the terms sector and cell can be interchangeable depending on the particular market.

FIG. 1 demonstrates how three cells (i.e., Cell 1 (107), Cell 2 (131) and Cell 3 (132)), each cell comprising an independent network of 7 DRUs, provide coverage and capacity to a given geographical area. A server 133 is utilized to control the switching function provided in the DAS network. Referring to FIG. 1 and by way of example, DMU 1 (102) receives digital downlink signals from BBU Sector 1 (101). The downlink signals received from BBU Sector 1 are digital baseband signals (i.e., digital signals at baseband frequency), which can be transported over a digital link (e.g., an optical cable) to the DMU 1. This implementation contrasts with other systems that receive RF (e.g., analog) signals from a BTS. Although an optical cable is illustrated as an example of a digital link transporting the digital baseband signals from Sector 1 of the BBU to DMU 1, this is not required by the present invention and other digital communication links including copper-based cables, Ethernet, wireless links, and the like are included within the scope of the present invention.

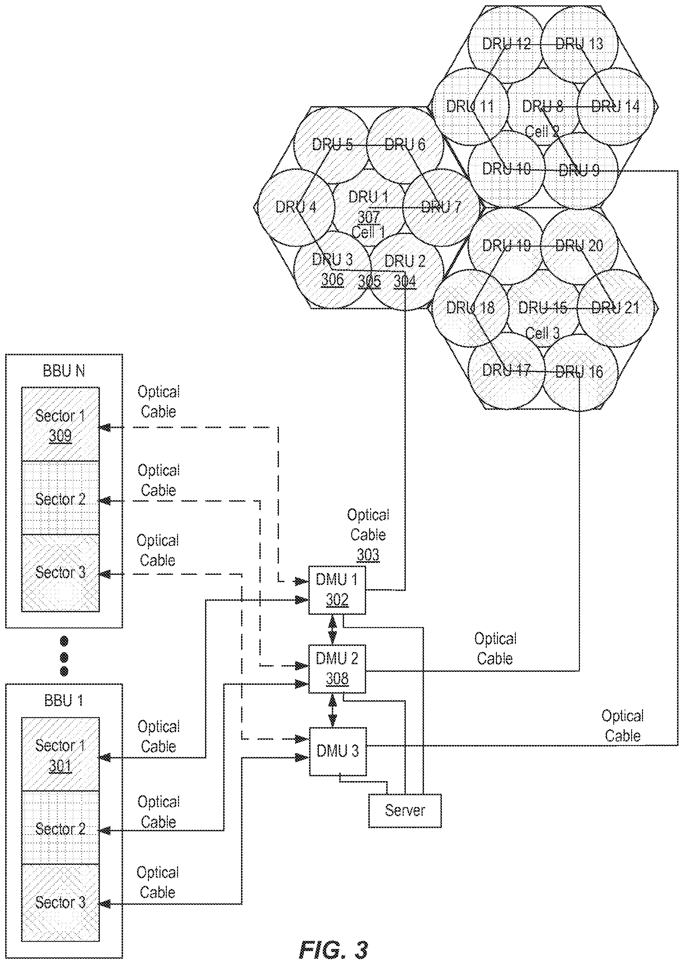

DMU 1 collates the digital baseband signals from the other DMUs (DMU 2 180 and DMU 3 130) onto a serial stream and the optical fiber cable 103 transports the desired signals to DRU 2 (104). Accordingly, signals from multiple sectors of the BBU, or from multiple BBUs as illustrated in FIG. 3, can be combined and transported using optical cable 103 to Cell 1. As additional examples, signals from all three sectors of the BBU 140 can be transported over optical cables 120 or 121 to Cell 3 and Cell 2, respectively as a result of the interconnection of DMU 1, DMU 2, and DMU 3.

Referring to Cell 1, optical cable 105 transports all the optical signals to DRU 3 (106). The other DRUs in the daisy chain for Cell 1 107 are involved in passing the optical signals onward to DRU 1 (107). Optical cable 120 and optical cable 121 are utilized to transport signals from DMU 2 (108) and DMU 3 (130) to Cell 3 (132) and Cell 2 (131), respectively.

DMU 1 (102) is networked with DMU 2 (108) and DMU 3 (130) to allow the downlink signals from Sector 2 (109) and Sector 3 (110) to be transported to all the DRUs in Cell 1. The system's switching and routing functions enable the selection of which sectors' signals are transmitted and received by each DRU.

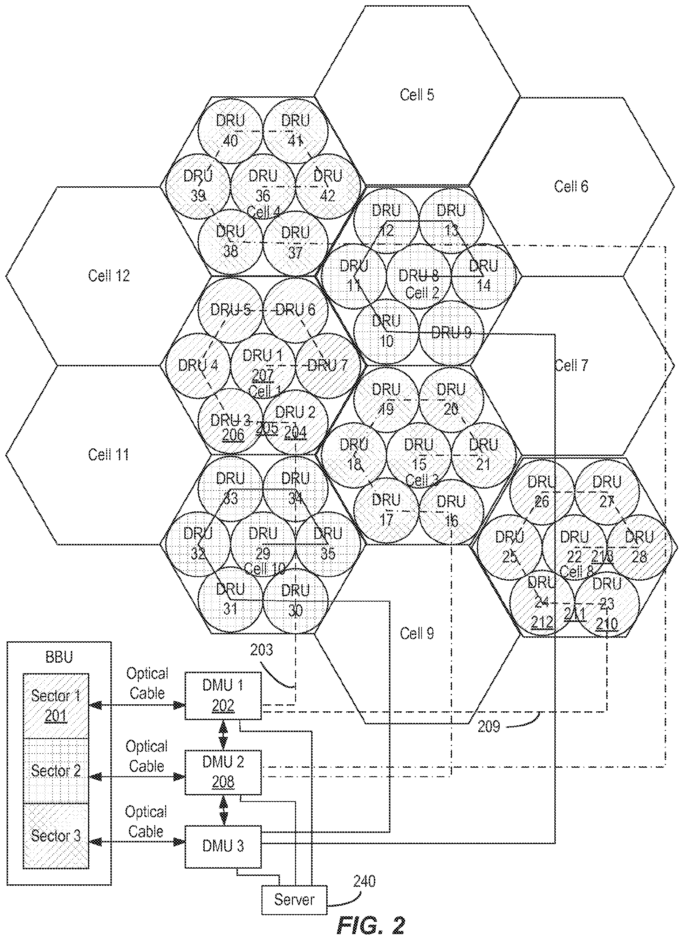

FIG. 2 shows an embodiment illustrating how a single base station can be used to provide coverage for a larger geographical area when a frequency reuse pattern of N=1 is used. In this embodiment, transport routing is based on having a single 3 sector BBU with 3 DMUs and 7 DRUs daisy chained together for each cell. Referring to FIG. 2, cell 1 and cell 8 would share the radio resources of sector 1 of the base station. Similarly, cell 2 and cell 10 would share the radio resources of sector 2. In the embodiment illustrated in FIG. 2, multiple optical fibers (e.g., fibers 203 and 209) are used to connect each DMU to the cells (e.g., DMU 1 and Cell 1 and Cell 8). Similar dual fiber outputs are provided for the other DMUs. In some embodiments, simulcasting can be performed by providing matching signals on the two fibers connected between the DMU and the Cells. Although spatial separation between Cells connected to a single DMU is illustrated in FIG. 2, this is not required by the present invention and some embodiments utilize a reuse pattern of N=0, with all frequencies being reused for every Cell. In these embodiments, the Cells connected to a single DMU can be contiguous. Thus, embodiments provide the coverage area associated with a sector of the BBU to be expanded since the signals from each sector can be broadcast over a larger area associated with multiple sets of daisy-chained DRUs. It should be noted that although some examples associated Sector 1 201 with DMU 1 202, optical cables 203 and 209, and Cells 1 and 8, the interconnection of the DMUs enables signals associated with other sectors to be transported to any of the illustrated Cells.

The DMUs control the routing of data between the BBU of the base station and the DRUs. Each individual data packet is provided with a header that uniquely identifies which DRU it is associated with. The DMUs are interconnected to allow transport of data among multiple DMUs. This feature provides the unique flexibility in the DAS network to route signals between the sectors and the individual DRUs. A server 240 is utilized to control the switching function provided in the DAS network. Referring to FIG. 2, and by way of example, DMU 1 (202) receives downlink signals from BBU 1 Sector 1 (201). DMU 1 collates the baseband signals from the other DMUs onto a serial stream and the optical fiber cable 203 transports the desired signals to DRU 2 (204). Optical cable 205 transports all the optical signals to DRU 3 (206). The other DRUs in the daisy chain are involved in passing the optical signals onward to DRU 1 (207). DMU 1 (202) is networked with DMU 2 (208) to allow the downlink signals from Sector 2 and Sector 3 to be transported to all the DRUs in Cell 1. Optical fiber cable 209 transports the desired signals to DRU 23 (210). Optical cable 211 transports all the optical signals to DRU 24 (212). The other DRUs in the daisy chain are involved in passing the optical signals onward to DRU 22 (213).

FIG. 3 shows an embodiment illustrating an application employing a base station hotel where N BBUs are interconnected to serve a given geographical area. In this embodiment, multiple 3 sector BBUs are utilized with 3 DMUs and 7 DRUs daisy chained together for each cell. The base station BBUs may represent independent wireless network operators and/or multiple interface standards (CPRI, OBSAI, etc.). Referring to FIG. 3 and by way of example, DMU 1 (302) receives downlink signals from BBU Sector 1 (301). DMU 1 302 transports the desired signals to DRU 2 (304). Optical cable 305 transports all the optical signals to DRU 3 (306). The other DRUs in the daisy chain are involved in passing the optical signals onward to DRU 1 (307). DMU 1 (302) is networked with DMU 2 (308) to allow the downlink signals from BBU 1 Sector 2 to be transported to all the DRUs in Cell 1. DMU 1 (302) receives downlink signals from BBU Sector N (309). DMU 1 (302) collates all the downlink signals from the various BBUs and DMUs.

In order to efficiently utilize the limited base station resources, the network of DRUs should have the capability of re-directing their individual uplink and downlink signals to and from any of the BBU sectors. Because the DRUs data traffic has unique streams, the DMU interconnection provides the mechanism to route the signal to different BBUs.

In an embodiment, the DRUs are configured in a loop configuration as illustrated in Cell 2 in FIG. 3. As illustrated, DRU 9 through DRU 14 are connected to each other and to DRU 8 through a loop, enabling operation of the DRUs in the loop in the case of failure of one of the DRUs. As an example, if DRU 13 failed or the connection to DRU 13 failed, the other DRUs in Cell 2 would be accessible through the loop configuration.

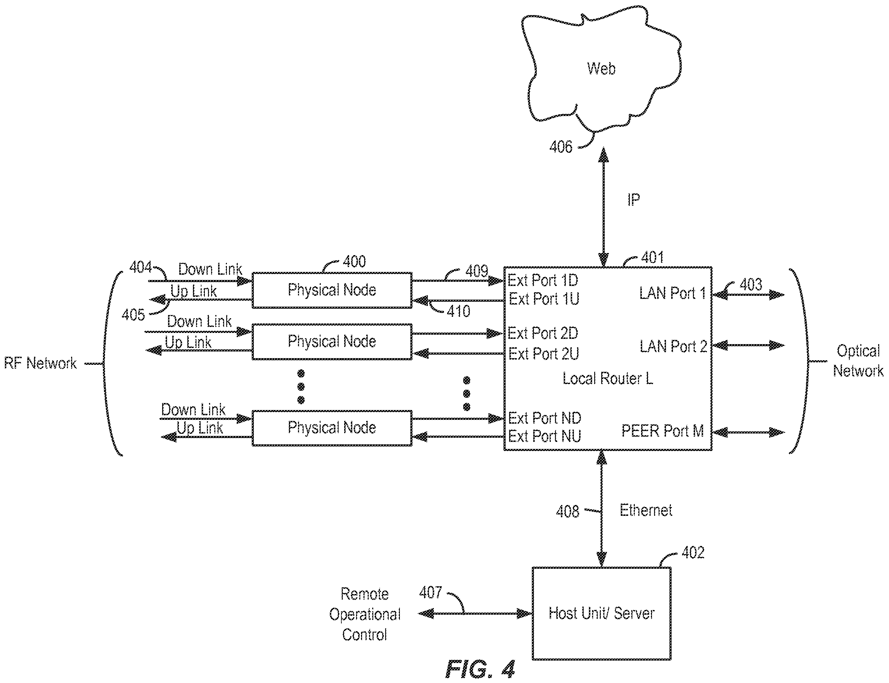

FIG. 4 is a block diagram of a Digital Access Unit (DAU), which contains Physical Nodes (400) and a Local Router (401) according to an embodiment of the present invention. The Physical Nodes translate the RF signals to baseband for the Downlink and from baseband to RF for the Uplink. The Local Router directs the traffic between the various LAN Ports, PEER Ports and the External Ports. The physical nodes connect to the BTS at radio frequencies (RF). The physical nodes can be used for different operators, different frequency bands, different channels, different standards, or the like. The physical nodes can combine the downlink and uplink signals via a duplexer or they can keep them separate, as would be the case for a simplex configuration.

FIG. 4 shows an embodiment whereby the physical nodes have separate outputs for the uplinks (405) and separate inputs for the downlink paths (404). The physical node translates the signals from RF to baseband for the downlink path and from baseband to RF for the uplink path. The physical nodes are connected to a Local Router via external ports (409,410)). The router directs the uplink data stream from the LAN and PEER ports to the selected External U ports. Similarly, the router directs the downlink data stream from the External D ports to the selected LAN and PEER ports.

In one embodiment, the LAN and PEER ports are connected via an optical fiber to a network of DAUs and DRUs. The network connection can also use copper interconnections such as CAT 5e or 6 cabling, or other suitable interconnection equipment. The DAU is also connected to the internet network using IP (406). An Ethernet connection (408) is also used to communicate between the Host Unit and the DAU. The DRU can also connect directly to the Remote Operational Control center (407) via the Ethernet port. Additional description related to digital access units is provided in U.S. Patent Application No. 13/754,702, filed on January 30, 2013 and entitled "Data Transport in a Virtualized Distributed Antenna System," the disclosure of which is hereby incorporated by reference in its entirety for all purposes.

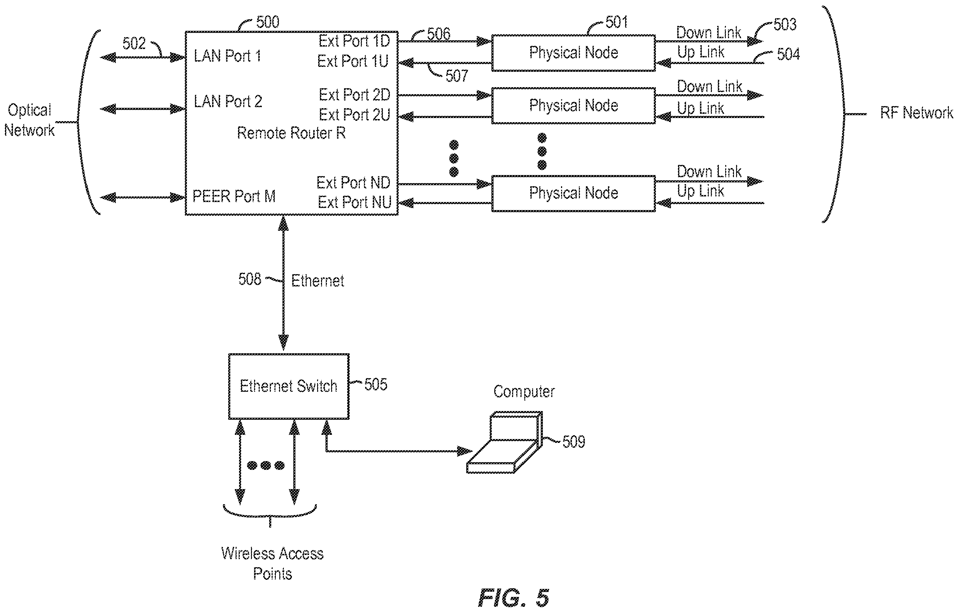

FIG. 5 is a block diagram of a Digital Remote Unit (DRU) according to an embodiment of the present invention. The DRU includes both a Remote Router (500) and Physical Nodes (501). The Remote Router directs the traffic between the LAN ports, External Ports and PEER Ports. The physical nodes connect to the BTS at radio frequencies (RF). The physical nodes can be used for different operators, different frequency bands, different channels, etc. FIG. 5 shows an embodiment whereby the physical nodes have separate inputs for the uplinks (504) and separate outputs for the downlink paths (503). The physical node translates the signals from RF to baseband for the uplink path and from baseband to RF for the downlink path. The physical nodes are connected to a Remote Router via external ports (506,507). The router directs the downlink data stream from the LAN and PEER ports to the selected External D ports. Similarly, the router directs the uplink data stream from the External U ports to the selected LAN and PEER ports. The DRU also contains a Ethernet Switch (505) so that a remote computer or wireless access points or both can connect to the internet.

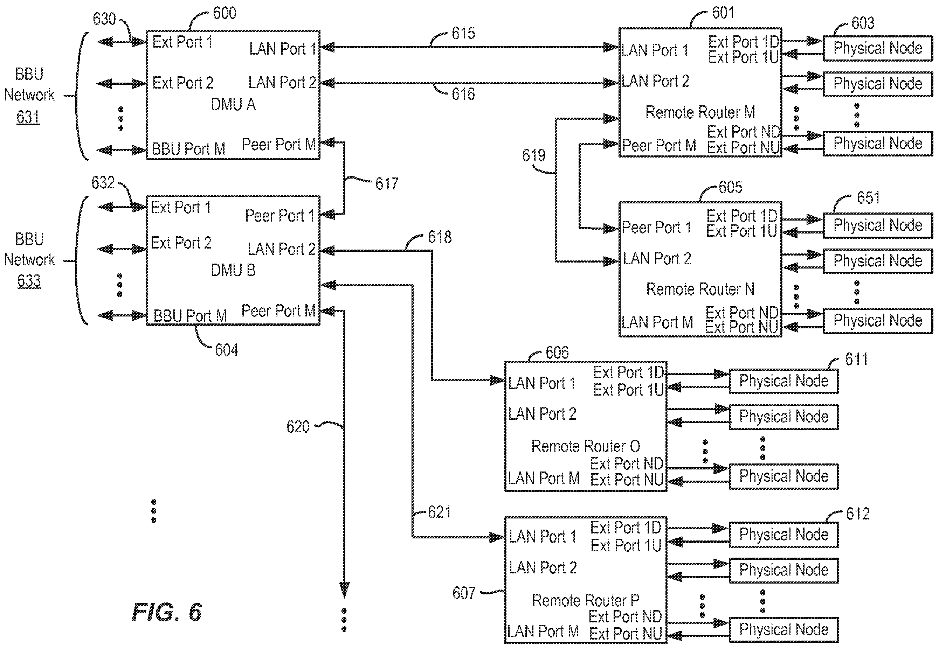

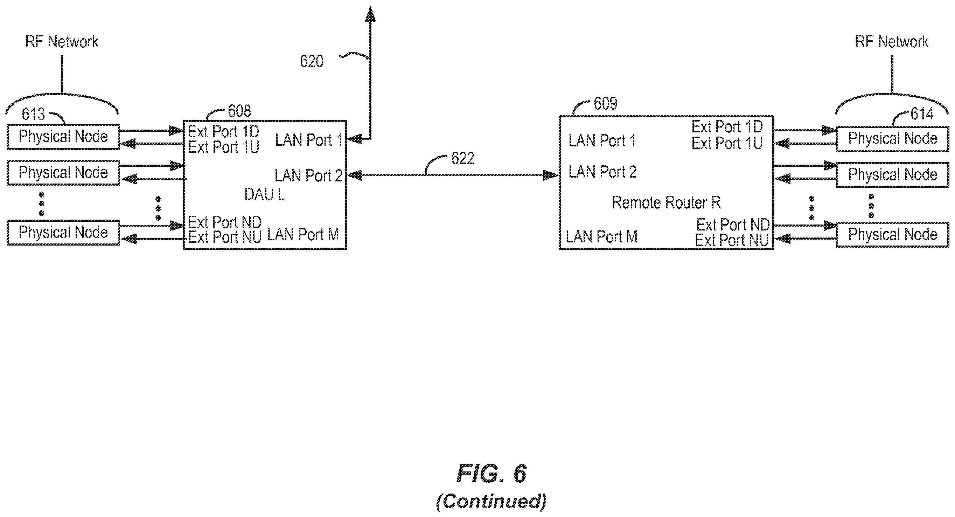

FIG. 6 depicts a typical topology where multiple Local Routers (DMUs and DAUs) are interconnected with multiple Remote Routers according to an embodiment of the present invention. In this embodiment, the DAS network that includes multiple DMUs, DAUs, and multiple DRUs. The DRUs are represented by the combinations of Remote Routers and Physical Nodes.

A first BBU network 631 is connected to DMU A 600 through a set of digital links including digital link 630. A second BBU network 633 is connected to DMU B 604 through a set of digital links including digital link 632. DMU A is connected to a first DRU including remote router M 601 and Physical Node 603 through bidirectional communications links 615 and 616. The physical nodes provide connectivity to an RF network as illustrated in FIG. 5. A second DRU including remote router N 605 and physical node 651 is connected to the first DRU in a daisy-chain configuration using bidirectional communications link 619. This configuration can be referred to as a cascading configuration and provides the opportunity to connect multiple remote routers to Remote Router M in a star configuration, thereby providing additional remote routers, similar to Remote Router N, each connected to Remote Router M. Thus, although a single remote (Remote Router N) is illustrated as connected to Remote Router M, multiple remotes (e.g., Remote Router N', Remote Router N", etc.) can be connected to Remote Router M. One of ordinary skill in the art would recognize many variations, modifications, and alternatives.

In addition to a daisy-chain configuration for the DRUs, the BBUs can be connected in a daisy-chain configuration and the DRUs can be connected in a star configuration. Referring to FIG. 6, BBU network 633 is connected to DMU B 604 through a set of digital links including digital link 632. DMU A and DMU B are connected in a daisy-chain configuration using digital link 617. Remote Router O 606 and Physical Nodes 611 make up a third DRU, which is connected to DMU B through digital link 618 and Remote Router P 607 and Physical Nodes 612 make up a fourth DRU, which is connected to DMU B through digital link 621. Thus, the third and fourth DRUs are connected to DMU B in a star configuration.

FIG. 6 also illustrates DAU L 608, which is connected to an RF network through Physical Nodes 613. The DAU L is connected to a fifth DRU including Remote Router R 609 and Physical Nodes 614. Thus, the configuration illustrated in FIG. 6 includes both DMUs receiving digital signals from the BBU networks and one or more DAUs receiving signals from RF networks, converting the RF signals to digital signals at baseband, and transporting signals to DRUs. Digital link 620 provides for connectivity between the DAUs and the DMUs, with DAU L connected in a daisy-chain configuration to DMU B.

In the embodiment illustrated in FIG. 6, the local routers in the DMUs and DAUs are interconnected via a PEER port. The Local routers can connect to the remote routers in the DRUs via an optical or copper connection. The remote routers in the DRUs can be connected in a daisy chain configuration with other DRUs or they may be connected with a local router via a star configuration. The PEER ports in a DMU can be used when there is no direct connection between a physical node connected to a local router's DMU and a physical node connected to a remote router DRU. PEER ports at the DRU can be used for daisy chaining between two or more DRUs.

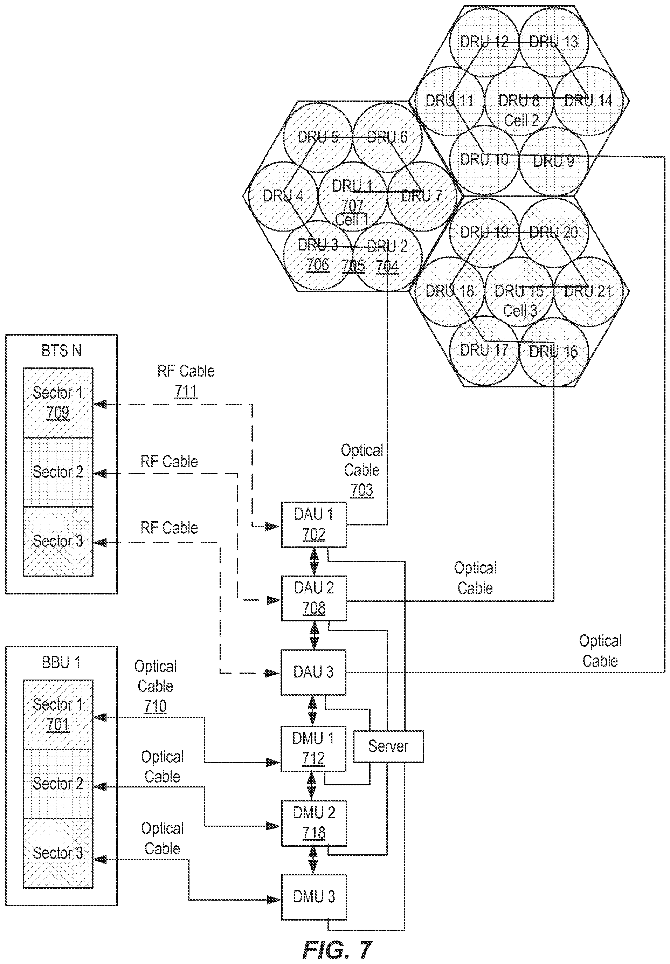

FIG. 7 shows an embodiment illustrating an application employing a base station hotel where multiple BBUs and BTSs are interconnected to serve a given geographical area. FIG. 7 illustrates features illustrated in FIG. 6, including interconnection of DAUs and DMUs and transporting of digital signals from the Local routers (DAUs and DMSs) to Remote routers (DRUs).

As described below, FIG. 7 illustrates the interconnection between BTSs to DAUs and BBUs to DMUs. The BBUs may represent independent wireless network operators and/or multiple interface standards (CPRI, OBSAI, etc.) and for different standards. The BTSs may represent independent wireless network operators and interface with DAUs at RF. According to embodiments of the present invention, DAU 1, which receives an RF signal from Sector 1 of BTS N, is interconnected with DMU 1, which receives a digital baseband signal from Sector 1 of BBU 1. The interconnection of hosts in the DAS network receiving both RF and baseband signals is a unique implementation provided by embodiments of the present invention.

Referring to FIG. 7 and by way of example, DAU 1 (702) receives downlink signals from BTS N Sector 1 (709) via RF cable 711. At DAU 1, the RF signal received from the BTS is translated to baseband and digitized. The carrier frequency associated with the RF signal is extracted during the translation to baseband. In some implementations, the DAU provides ports associated with each of the standard carrier frequencies (e.g., a 700 MHz port, an 850 MHz port, a 1900 MHz port, and a 2100 MHz port). Accordingly, the port to which the RF cable from the BTS is connected can be utilized to identify the carrier frequency.

DAU 1 (702) transports the desired signals to DRU 2 (704). Optical cable 705 transports all the optical signals to DRU 3 (306). The other DRUs in the daisy chain are involved in passing the optical signals onward to DRU 1 (707). In other embodiments, as discussed in relation to FIG. 6, the DRUs in Cell 1 could be connected in a star configuration, with DRU2 connected to each of DRU3 - DRU 1 individually in a star configuration. Thus, in this star configuration, DRU2 would receive signals from DAU1 and then transport signals to each of the other DRUs in Cell 1 independently.

DAU 1 (702) is networked with DAU 2 (708) to allow the downlink signals from BTS N Sector 2 to be transported to all the DRUs in Cell 1. DAU 1 (702) receives downlink signals from BTS Sector N (709).

DMU 1 (712) interfaces to BBU 1 sector 1 (701) and receives downlink signals from Sector 1 of BBU 1 using a digital link, which is illustrated, by way of example, by optical cable 710. The signal received at DMU 1 is a digital baseband signal. The digital signal includes the I/Q payload as well as a header that provides information related to which carrier frequency should be associated with the signal when it is translated to RF at the corresponding DRU for broadcast. For example, in an embodiment, a first signal in the 1900 MHz band could be received by DAU 1 and a second signal that is to be transmitted at the DRU in the 1900 MHZ band could be received by DMU 1. Using embodiments of the present invention, this first signal and second signal can be combined (i.e., framed), transported to a DRU, for example, the DRUs in Cell 1, translated to the 1900 MHz band, and broadcast as RF signals. As will be evident to one of skill in the art, the combined signal will include information, for example, header information, specifying the carrier frequency, e.g., the 1900 MHz band, that is associated with the first and second signals.

In a first framing approach, time division multiplexing can be used to transmit the signals associated with each of the carrier frequencies, for example, a first portion of the frame for the signals that are to be broadcast at the 700 MHZ band, a second portion of the frame for the signals that are to be broadcast at the 8500 MHZ band, and a third portion of the frame for the signals that are to be broadcast at the 1900 MHZ band. In this first framing approach, signals from the sectors of the BTS and the sectors of the BBU that are associated with the 1900 MHz band will be combined in the third portion of the frame and transported to the DRUs, where they will subsequently be broadcast in the 1900 MHz band.

In a second framing approach, each sector of the BTS (which can be referred to as a cell ID) and each sector of the BBU is assigned a time slot in a time division multiplexing system. The signals from these sectors are collected by the DAUs and DMUs and framed with the signal from each sector, which can be referred to as a channel, receiving a time slot.

In some embodiments, because of the interconnection of the DAUs and DMUs, the information framed at the DAUs/DMUs can be transported to all of the DRU cells (e.g., with the same signals transported on the optical cables between the DAUs/DMUs and the DRUs) with the DRU selecting the data packets that are to be broadcast. Referring to FIG. 7, the signal from Sector 1 of BTS N, which can be referred to as a carrier since it is a signal residing at a specific frequency and characterized by a signal bandwidth, can be transported to the DRUs. At the DRUs, the carriers to be broadcast can be determined at the remote end of the system by programming of the DRUs. Accordingly, embodiments of the present invention provide a system operator with flexibility in configuring, reconfiguring, and optimizing the network.

DMU 1 is interconnected with DAU 3, and with DAU 2, and DAU 1 as well. This capability provides a mechanism to collate signals from BTSs with signals from BBUs. Although optical cable 703 connecting DAU 1 and DRU 2 and the corresponding optical cables connecting DAU 2 to DRU 16 and DAU 3 to DRU 9 are illustrated in FIG. 7, it should be appreciated that the signals can be transported from the DMUs to the DRUs by embodiments of the present invention. In these embodiments, the optical cables will connect DMU 1 to DRU 2, DMU 2 to DRU 16, and DMU 3 to DRU 9, for instance, to provide the DAS functionality. In other embodiments, the DRUs in the cells are connected to a combination of DAUs and DMUs. One of ordinary skill in the art would recognize many variations, modifications, and alternatives.

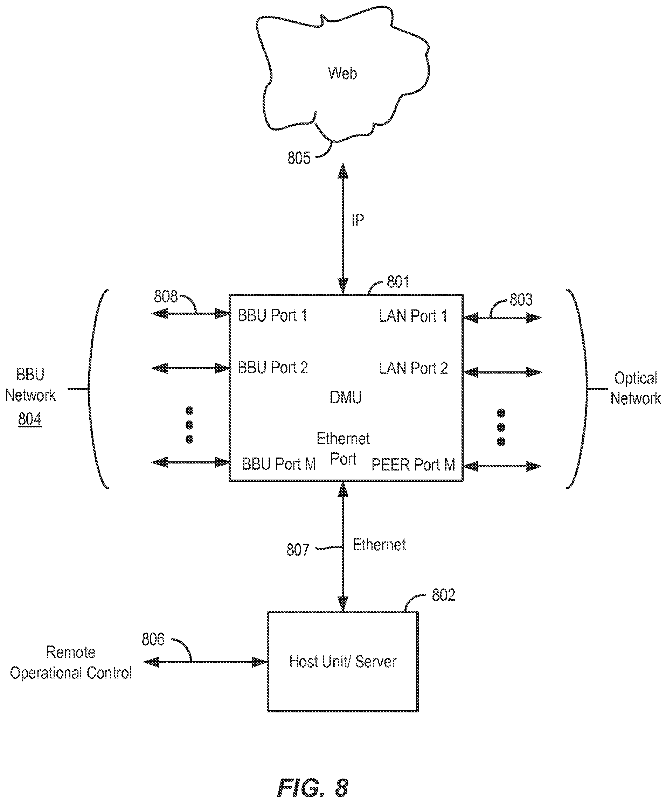

FIG. 8 shows a block diagram of a Digital Multiplexer Unit (DMU) according to an embodiment of the present invention. The DMU 801 includes both Router (i.e., optical network) and BBU (BBU Network 804) interface nodes. The router functionality of the DMU directs the traffic between the LAN ports, BBU Ports and PEER Ports. The BBU nodes can be used for different operator BBU equipment, connected through digital links 808. The router directs the uplink data stream received through digital links 803 by the LAN and PEER ports to the selected BBU ports. Similarly, the router directs the downlink data stream from the BBU ports to the selected LAN and PEER ports. The BBU port translates the uplink signals destined for its specific port to the interface standard used by the BBU connected to that specific port. Similarly, the downlink signal from a BBU port is translated from the specific BBU protocol standard to a common baseband signal used to collate the various downlink signals. The DMU also contains an Ethernet port so that a remote computer 802 or wireless access points can connect to the internet, thereby enabling remote operational control 806. Additionally, access to the Web 805 is provided by an IP connection. The LAN ports of the DMU interface to the various DRUs connected to the DMU. The PEER ports are used to interface to other DMUs or DAUs.

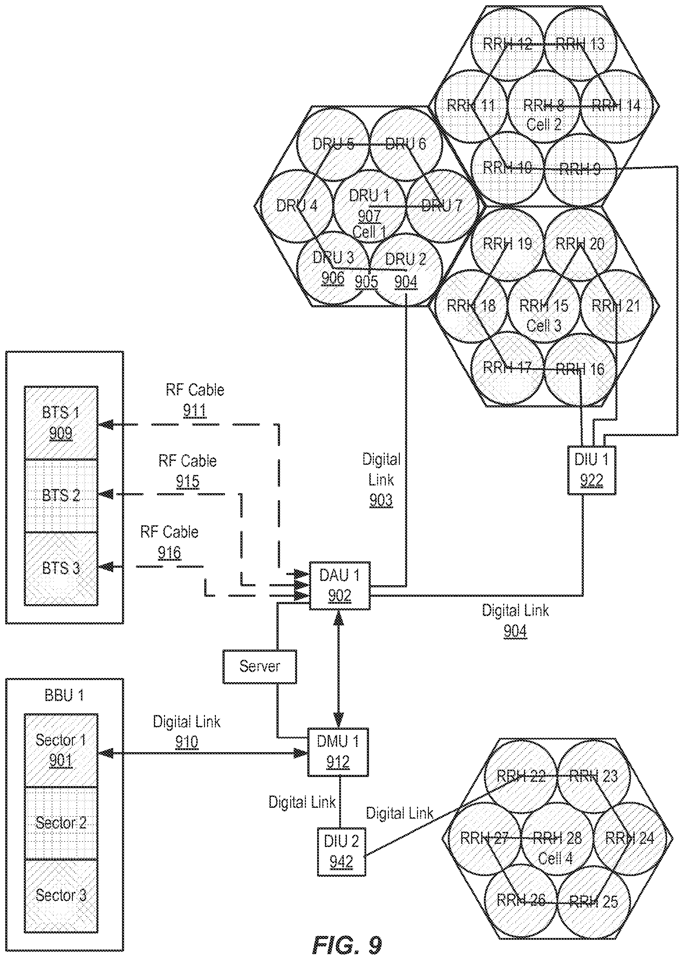

FIG. 9 shows a block diagram of one embodiment of a distributed radio network that includes both DRUs and RRHs according to an embodiment of the present invention. As illustrated in FIG. 9, the basic structure and an example of transport routing based on having multiple BTSs and one or more BBUs. The BTSs BTS 1 (909), BTS 2, and BTS 3 are connected to DAU 1 902 using RF cables 911, 915, and 916 as discussed previously. The BBU is connected to DMU 1 912 using a digital link 910 (e.g., an optical cable) as discussed previously. A server is utilized to interconnect the DAU and the DMU.

Digital link 903, which can be an optical cable, is utilized to transport signals from DAU 1 902 to DRU 2 904. Cell 1 utilizes a daisy-chain architecture with DRU 3 receiving a signal from DRU2 through optical cable 905, and the like.

Digital link 904, which can be an optical cable, is utilized to transport signals from DAU 1 to Digital Interface Unit (DIU) 1 922. In addition to DIU 1, the system can include additional DIUs, such as DIU 2. The additional DIUs can be connected to either the DAU or the DMU. As will be evident to one of skill in the art, more than one DAU and more than one DMU can be utilized as discussed throughout the present specification. In FIG. 9, second DIU 2 942 is connected to DMU 1 using a digital link and a plurality of RRHs making up Cell 4 are connected to the DIU 2 using a digital link.

Cell 2 and Cell 3 include a number of remote radio heads (RRHs) that interface with the DIU 1 and communicate with the corresponding vendor's BBU 1 (e.g., sector 901) using a vendor specific protocol. The DIU can be placed anywhere in the network with the functionality to interface the RRHs to the DAS network. The data transport mechanism is equivalent to a tunnel through arrangement whereby the DAS protocol is distinct from the vendor specific protocol.

Cell 2 utilizes a daisy-chain architecture in which the RRHs are connected to the next RRH in the cell. Cell 3 utilizes a combination of daisy-chain and star configurations. As illustrated, in Cell 3, a first set of daisy-chained RRHs (RRH 16 - RRH 19) are connected to DIU 1. A second set of daisy-chained RRHs (RRH 21, RRH 20, and RRH 15) are also connected to DIU 1 providing a star configuration, with each set of RRHs being connected as a daisy-chain.

In one embodiment, BBU 1 could be associated with a company utilizing a proprietary protocol for transmission of data. Accordingly, BBU 1 interacts with proprietary RRHs, for example, manufactured by the same company. In this situation, DMU 1 and DIU 1 are used to transport the signal using a proprietary protocol received through digital link 910 (e.g., an optical cable) from the BBU 1 to the RRHs, for example, those in Cell 2 and Cell 3. The signal received at DMU 1 is transported to DAU 1, routed to DIU 1, and then delivered to the appropriate RRHs. This design provides flexibility when proprietary signals are utilized, effectively providing for transportation of signals to remotes, independent of the signal format. Thus, both proprietary (e.g., BBU 1) and open architectures (BTS1 - BTS2) are integrated over the same network using embodiments of the present invention. In an embodiment, routing tables can be provided in the DIU 1 to route the downlink signals to the proper RRH. One of ordinary skill in the art would recognize many variations, modifications, and alternatives.

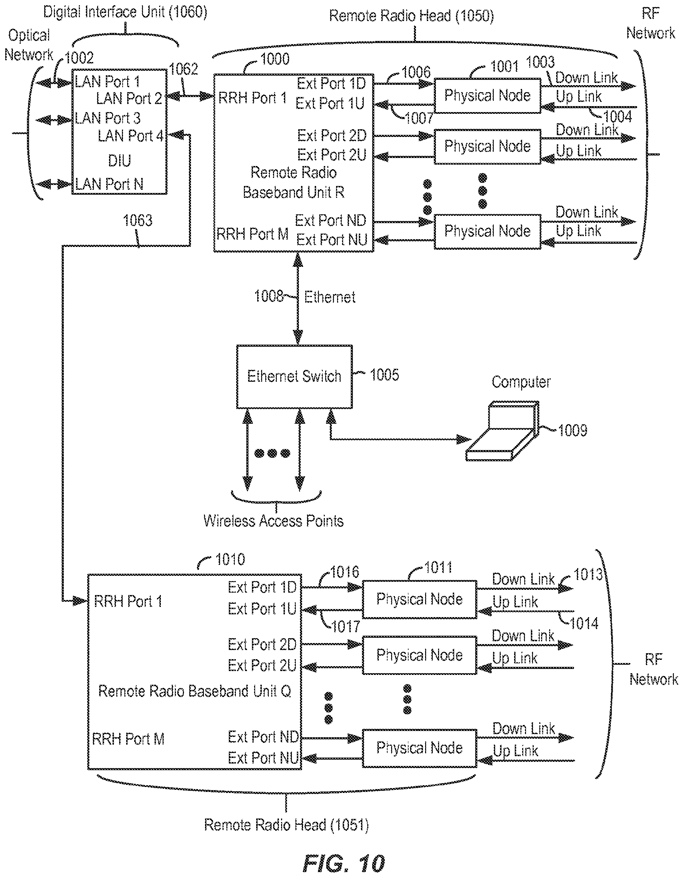

FIG. 10 depicts a Digital Interface Unit (DIU) connected to two Remote Radio Heads (RRHs) according to an embodiment of the present invention. In this topology, multiple Remote Radio Heads can be interconnected with a DIU according to an embodiment of the present invention.

The RRHs 1050 and 1051 each include a Remote Radio Baseband Unit 1000/1010 and Physical Nodes 1001/1011 and the other illustrated physical nodes. The physical nodes provide the functionality of RF radios and interface to one or more antennas (not shown). The DIU 1060 frames/deframes the signals between the RRHs and the common transport media, such as an optical fiber 1002, which transports the signal back to the DAUs and DMUs.

Referring to FIG. 10, the DIU is connected to the Remote Radio Baseband Units 1000/1010 using an optical fiber or cable 1062/1063 in some embodiments. In the illustrated embodiment, the RRHs are connected to the DIU in a star configuration although they can also be daisy-chained. Downlink signals are transmitted 1006 from Remote Radio Baseband Unit R to the physical nodes, e.g., Physical Node 1001 and uplink signals 1007 are received from the physical nodes. As discussed above, the down link signals can be transmitted over an RF cable 1003 to an antenna for broadcast. Up link signals are received at the physical nodes using RF cables such as RF cable 1004. The Remote Radio Baseband Unit 1000 is connected to an Ethernet Switch 1005 using an Ethernet cable 1008. The Ethernet Switch can be connected to wireless access points, a computer 1009, or the like.

Because of the modularity of the present invention, a second RRH 1051 is illustrated, including Remote Radio Baseband Unit Q 1010, which is connected to physical nodes, e.g., Physical Node 1011. As discussed in relation to Remote Radio Baseband Unit R, downlink signals are transmitted 1016 from Remote Radio Baseband Unit Q to the physical nodes, e.g., Physical Node 1011 and uplink signals 1017 are received from the physical nodes. The down link signals can be transmitted over an RF cable 1013 to an antenna for broadcast. Up link signals are received at the physical nodes using RF cables such as RF cable 1014. Remote Radio Baseband Unit Q can also be connected to Ethernet Switch 1005

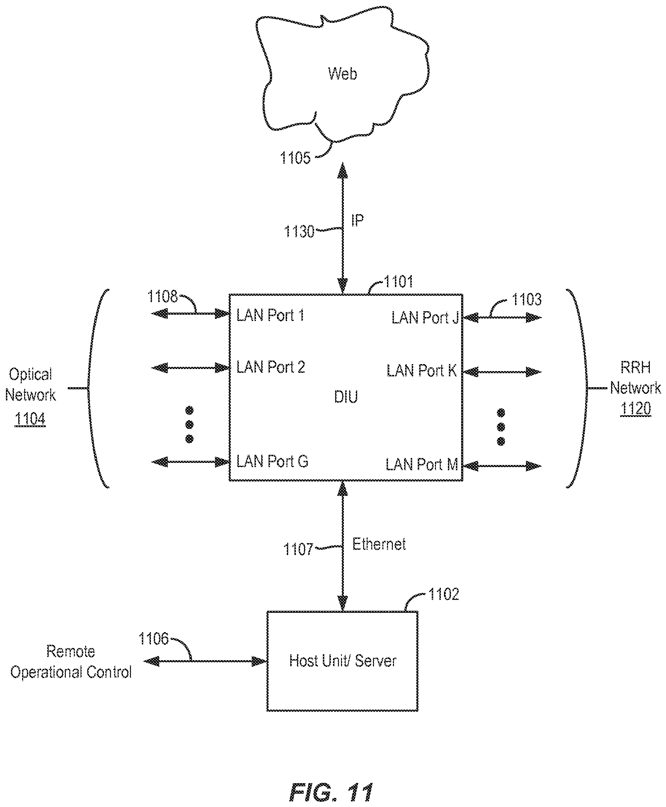

FIG. 11 is a block diagram illustrating a Digital Interface Unit (DIU) according to an embodiment of the present invention. In this embodiment of the DIU 1101, there are multiple ports that interface between the RRHs and either a DAU or a DMU. As illustrated in FIG. 11, LAN Port 1 is connected to optical fiber 1108, which provides connectivity to optical network 1104. LAN Ports 2 through G provide connectivity through the illustrated optical cables to optical network 1104. Additionally, LAN Port J is connected to optical cable 1103, which provides connectivity to RRH network 1120. LAN Ports K through M provide connectivity through the illustrated optical cables to RRH network 1120.

To provide for control and management of the DIU 1101, Ethernet cable 1107 is utilized to communicate with Host Unit/Server 1102, which can be accessed by Remote Operational Control using communications link 1106. In some embodiments, Ethernet cable 1107 is replaced using an optical fiber, or other suitable communications link. In addition to access for Remote Operational Control, the DIU 1101 can be connected to the Web 1105 using an IP link 1130. The DIU will frame the Uplink signals from the RRHs onto a DAS frame and deframe the DAU signals for the downlink to the RRHs.

It is also understood that the examples and embodiments described herein are for illustrative purposes only and that various modifications or changes in light thereof will be suggested to persons skilled in the art and are to be included within the spirit and purview of this application and scope of the appended claims.

Appendix I is a glossary of terms used herein, including acronyms.

Appendix II contains clauses that describe subject matter which also forms part of the disclosure.

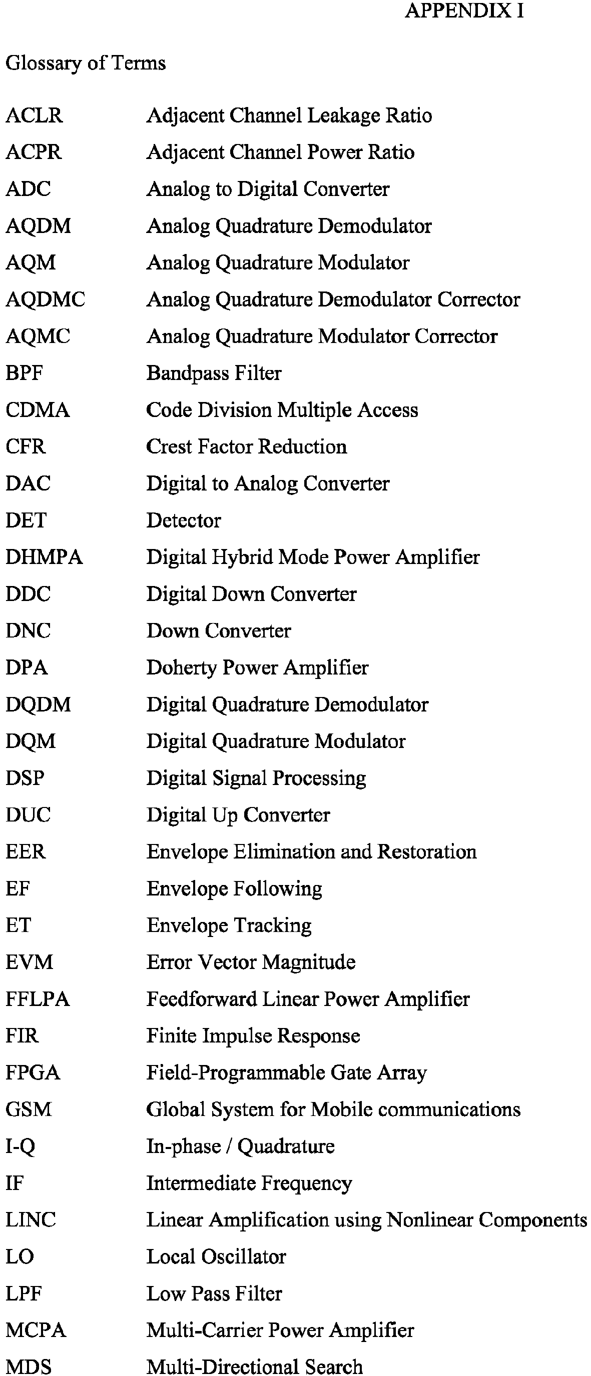

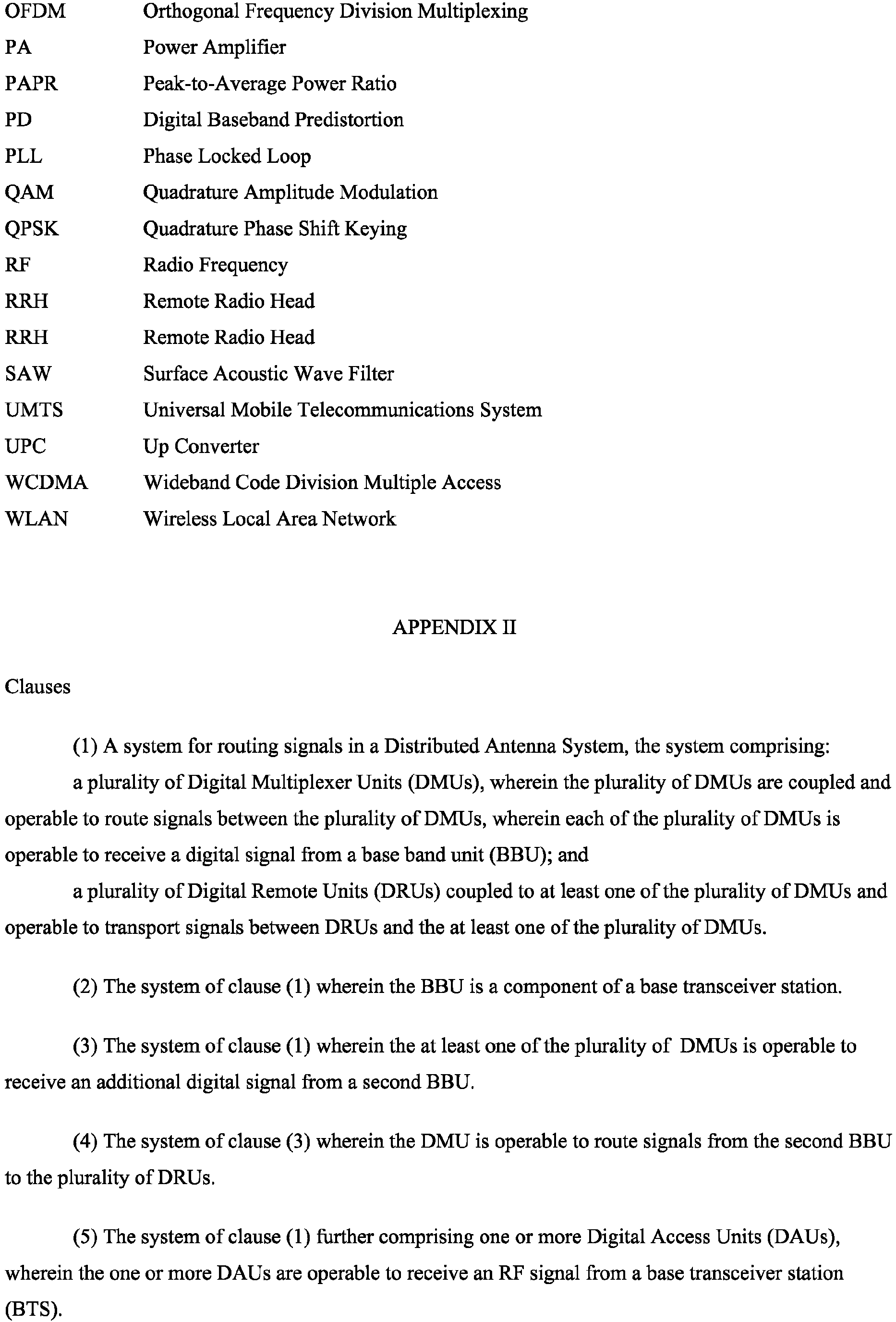

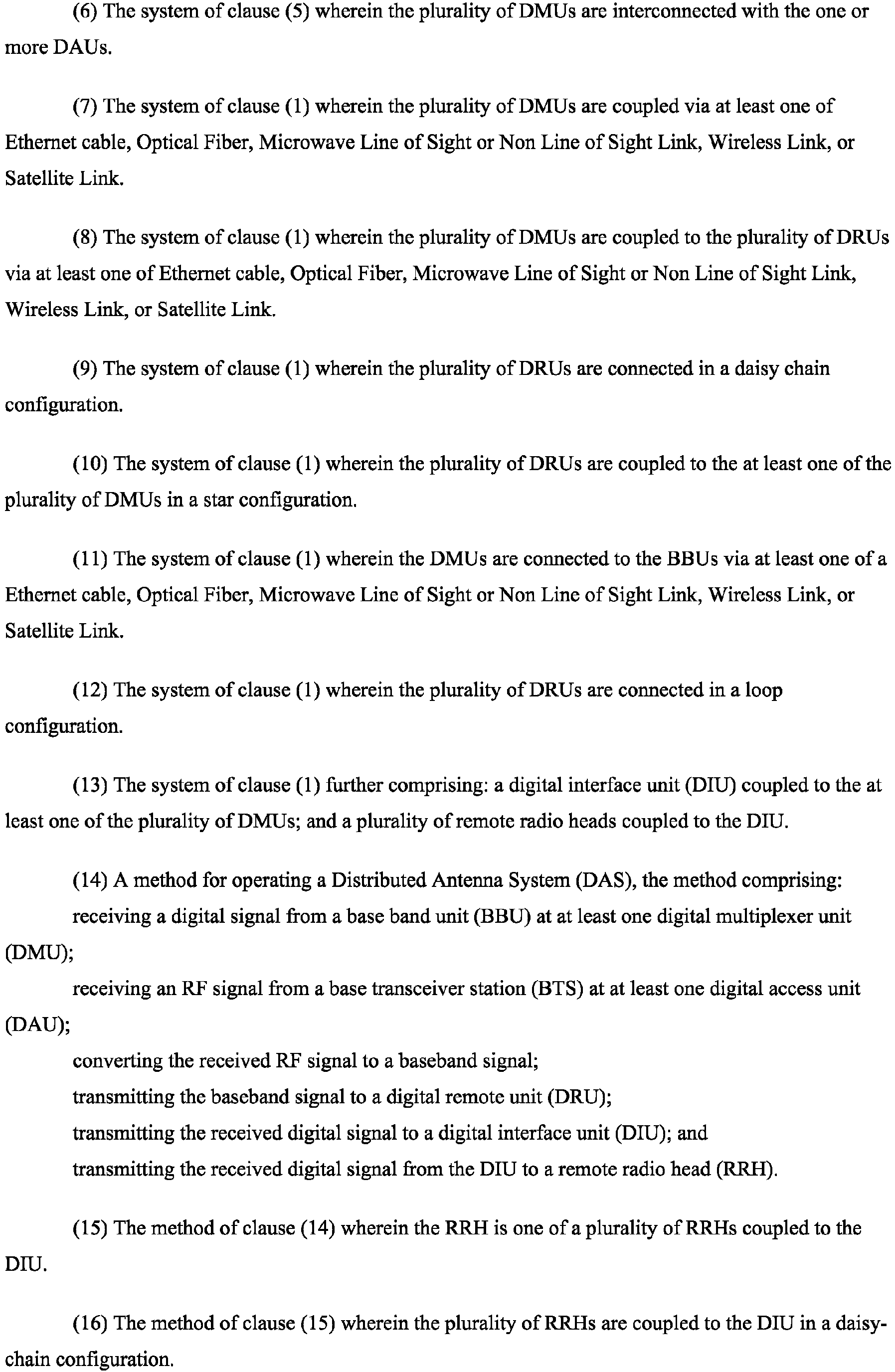

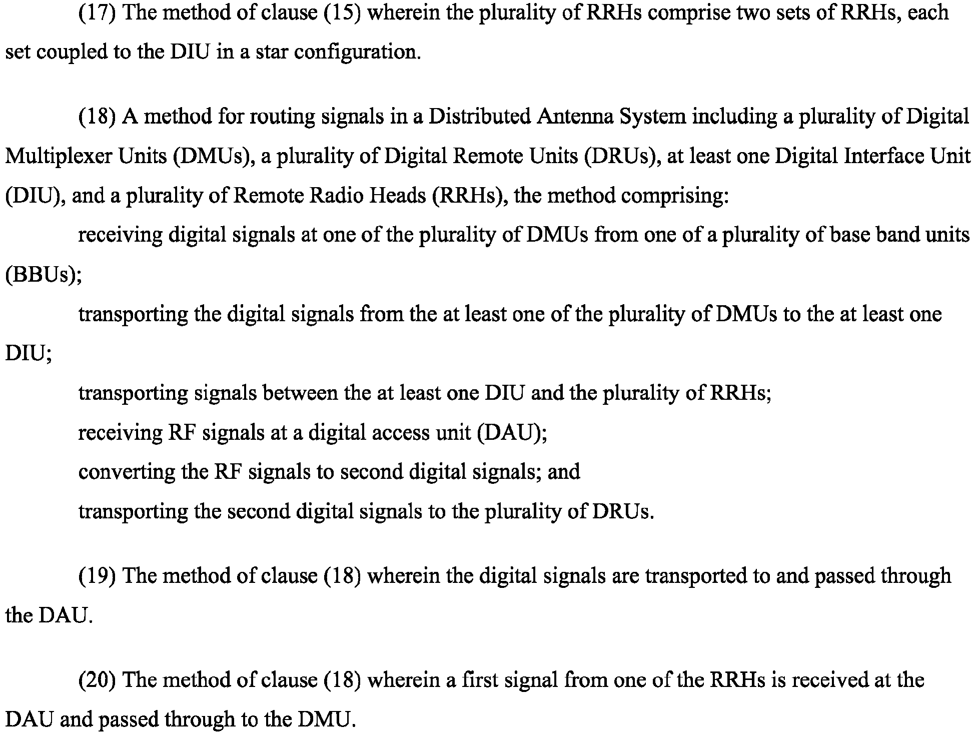

## Claims

1. A distributed antenna system comprising:
one or more Digital Access Units, DAUs, (902) operatively coupled to a base transceiver station (909);
a Digital Interface Unit, DIU, (922) operatively coupled to the one or more DAUs (902) by a digital link (904);
a plurality of Remote Radio Heads, RRHs, (8-14, 15-21) operatively coupled to the DIU (922) by a digital link;
one or more Digital Multiplexer Units, DMUs, (912) operatively coupled to one or more base band units, BBUs, (901) by a digital link (910) and operatively coupled to the one or more DAUs;
a second DIU (942) operatively coupled to the one or more DMUs (912) by a digital link; and
a second, different, plurality of RRHs (22-28) operatively coupled to the second DIU (942) by a digital link.

2. The system of claim 1, further comprising routing tables in the DIU to route downlink signals to a proper RRH.

3. The system of claim 1, further comprising transporting signals in the second DIU to a RRH of the second, different, plurality of RRHs.

4. The system of claim 1, further comprising a plurality of Digital Remote Units, DRUs, (904-907) operatively coupled to a DAU (902) by a digital link (903).

5. The system of claim 1, wherein the DAU is operatively coupled to the base transceiver station by an RF cable.

6. The system of claim 1, wherein the one or more DMUs are connected to the BBUs via at least one of an Ethernet cable, an optical fiber, a microwave line of sight or non-line of sight link, a wireless link, or a satellite link.

7. The system of claim 1, wherein one BBU is a component of a base transceiver station.

8. The system of claim 1, further comprising second routing tables in the second DIU to route downlink signals to a proper RRH.

9. The system of claim 1, further comprising a server (133, 240) interconnecting the DAU and the DMU.

10. The system of claim 9, wherein the server control switching functionality.

11. The system of claim 1, wherein the digital link is an optical cable.

12. The system of claim 1, wherein at least one of the BBUs is associated with a proprietary protocol for transmission of data.

13. The system of claim 1, wherein each DAU includes physical nodes and a local router.

14. The system of claim 1, wherein each DIU includes multiple ports that interface between RRHs and either a DAU or DMU.
